# EUROPEAN PATENT APPLICATION

(11) **EP 4 566 690 A1**
(43) Date of publication of application: **11.06.2025**
(21) Application number: 23850086.2
(22) Date of filing: 01.08.2023
(51) Int. Cl.: B01D 39/20, B23K 11/00, B23K 11/22, B60R 21/264

(54) **WINDING, METHOD FOR MANUFACTURING WINDING, WELDING ELECTRODE, AND MANUFACTURING DEVICE**

(30) Priority: 03.08.2022 JP 2022123942
(71) Applicant: Fuji Filter Manufacturing Co., Ltd., Tokyo 103-8308 (JP)
(72) Inventor: YOSHIDA Yutaka, Tokyo 103-8308 (JP); MATSUMOTO, Takashi, Tokyo 103-8308 (JP)
(74) Representative: Stöckeler, Ferdinand
(86) International application number: PCT/JP2023/028133
(87) International publication number: WO 2024/029532

(57) **Abstract**

To manufacture a winding configured to prevent a terminal end part of a metal wire from damaging other components and the like by making the distance from a welded part to a terminal edge as short as possible without increasing the number of manufacturing steps, and to prevent manufacturing defective windings. The winding is a porous winding (a filter 10) formed by winding at least one continuous metal wire 20 in a helical and multilayered manner. In the winding, a terminal end part 30 (a metal wire portion 20n) of the metal wire is resistance spot welded to another portion (a metal wire portion 20m) of the metal wire and is fusion-cut at the welded portion. The terminal end part 30 (the metal wire portion 20n) has a fused solidified part 31n where entirety of the metal wire in a width direction has been solidified after being fused.

## Description

### Field

The present invention relates to a porous winding formed by winding at least one continuous metal wire in a helical and multilayered manner, a method for manufacturing a winding, a welding electrode suitable for manufacturing windings, and a manufacturing device having a welding electrode.

### Background

A porous winding having a hollow cylindrical shape formed by winding at least one continuous metal wire in a helical and multilayered manner has been used as a filter that removes foreign objects larger than a predetermined size from fluids, and used for purposes such as cooling fluids.

Patent Document 1 is mentioned as a document describing such a winding.

In the winding described above, an end part at a winding end side of a metal wire needs to be fixed to an appropriate portion of the winding by welding or the like and the metal wire needs to be cut.

### Citation List

### Patent Literature

Patent Literature 1: Japanese Patent Application Laid-open No. 2001-171472

### Summary

### Technical Problem

Here, a terminal edge (a cut end) of the metal wire is preferably as close to a welded part as possible. When the terminal edge of the metal wire is largely separated from the welded part, following problems may occur. As an example of the problems, a metal wire portion from the welded part to the terminal edge may catch on other components and the like to damage other components and the like. As another example of the problems, when the distance from the welded part to the terminal edge is long, the welded part easily peels off.

If a nipper, scissors, or the like are used as a tool for cutting the metal wire, a cutting blade needs to be operated in a direction intersecting with a longitudinal direction of the metal wire. At the time of cutting, the cutting blade is inserted between the metal wire and the winding, so that the distance of the metal wire portion from the welded part to the terminal edge becomes long, and the metal wire portion easily rises toward an outer diameter side due to the insertion of the cutting blade. Therefore, in order to prevent the problems described above, post-processing for shortening the length of the metal wire portion from the welded part to the terminal edge is necessary, and this increases the number of manufacturing steps.

Further, in order to shorten the length of the metal wire portion from the welded part to the terminal edge, it is conceivable that the metal wire is cut by being repeatedly folded at a position very close to the welded part in a direction intersecting with the longitudinal direction. However, in this method, the cut part is easily deformed in the folding direction and work-hardened, so that the problem that the metal wire portion damages other components cannot be solved. Further, this method is troublesome as a cutting method.

While Patent Document 1 describes that an end part at a winding end side of the metal wire is welded, it does not describe a cutting process of how to cut the end part at the winding end side.

The present invention has been made in view of the above circumstances, and an object thereof is to provide a winding in which the distance from a welded part to a terminal edge is made as short as possible without increasing the number of manufacturing steps.

### Solution to Problem

In order to solve the above problems, the present invention provides a porous winding formed by winding at least one continuous metal wire in a helical and multilayered manner, wherein a terminal end part of the metal wire is resistance spot welded to another portion of the metal wire and is fusion-cut at the welded portion.

### Advantageous Effects of Invention

According to the present invention, it is possible to provide a winding in which the distance from a welded part to a terminal edge is made as short as possible without increasing the number of manufacturing steps.

### Brief Description of Drawings

[FIG. 1] FIG. 1 is a schematic perspective view of a filter according to an embodiment of the present invention.
[FIGS. 2] FIGS. 2 are schematic diagrams illustrating a state of a terminal end part of the filter, where FIG. 2(a) is a sectional view of the terminal end part cut along a longitudinal direction of a metal wire, and FIG. 2(b) is a perspective view of the filter observed from an outer diameter side.
[FIG. 3] FIG. 3 is a diagram illustrating the vicinity of the terminal end part of the filter in a real photograph.
[FIG. 4] FIG. 4 is a diagram mainly and schematically illustrating a winding device in a manufacturing device of a winding.
[FIG. 5] FIG. 5 is a diagram particularly and schematically illustrating a downstream side of a guide member in the manufacturing device of a winding.
[FIG. 6] FIG. 6 is a perspective view illustrating an example of an electrode.
[FIGS. 7] FIGS. 7(a) and 7(b) are plan views for explaining a relation between an electrode tip end face and a metal wire that comes into contact with the electrode tip end face.
[FIGS. 8] FIGS. 8(a) and 8(b) are schematic diagrams illustrating states of a metal wire right before being cut.
[FIGS. 9] FIGS. 9(a) and 9(b) are schematic diagrams illustrating states of a metal wire right before being cut.
[FIGS. 10] FIGS. 10(a) and 10(b) are schematic diagrams illustrating states of a metal wire right before being cut.

### Description of Embodiments

The present invention will be described below in detail with an embodiment illustrated in the drawings. Note that constituent elements, types, combinations, shapes, relative arrangements thereof, and the like described in the embodiment are not intended to limit the scope of the invention solely thereto and are merely explanatory examples unless otherwise specified. Further, configurations described in each embodiment may be carried out as they are combined with each other as long as there are no contradictions.

### [General shape of filter]

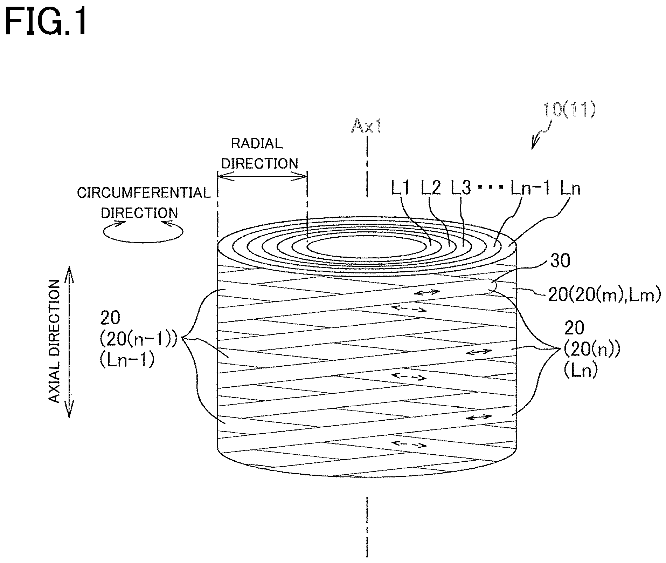

FIG. 1 is a schematic perspective view of a filter according to an embodiment of the present invention.

A hollow cylindrical filter 10 according to the embodiment of the present invention is formed by winding at least one continuous metal wire 20 at a certain pitch in a helical and multilayered manner so as to have a certain tilt angle with respect to an axial direction (the up-down direction in the drawing). The filter 10 is an example of a porous winding formed by winding at least one continuous metal wire in a helical and multilayered manner. Here, respective layers of the metal wire 20 wound in the same direction are referred to as wire layers L1, L2, L3, .... The metal wires constituting each of the metal wire layers L1, L2, L3, ... extend in the same direction tilting with respect to an axial direction (a central axis Ax1) of the hollow cylindrical filter in a front view, and metal wires constituting the respective wire layers adjacent to each other in a direction toward an inner or outer diameter side extend in directions intersecting with each other (directions not parallel to each other).

An extending direction of a metal wire portion 20(n) (the thickness thereof is not illustrated in the drawings) constituting a wire layer Ln (n is a natural number) on the outermost layer in FIG. 1 (a longitudinal direction of the metal wire portion 20(n)) is a direction represented by a solid line arrow, and an extending direction of a metal wire portion 20(n-1) constituting a wire layer Ln-1 just inside the metal wire portion 20(n) (a longitudinal direction of the metal wire portion 20(n-1)) is a direction represented by a dashed line arrow.
n is set to approximately 20 to 20000 (corresponding to approximately 10 to 10000 reciprocating).

That is, the filter 10 includes one wire layer (for example, the wire layer L1) formed by helically winding the metal wire 20 at a certain tilt angle with respect to the axial direction and another wire layer (for example, the wire layer L2) formed by helically winding the metal wire at a tilt angle different from that of the metal wire constituting the one wire layer L1 so as to overlap an outer circumferential side of the one wire layer L1. The metal wires respectively constituting the one wire layer L1 and the another wire layer L2 adjacent to the one wire layer L1 are configured to be non-parallel to the axial direction, and to intersect with each other.

The filter 10 may be configured such that the tilt angle of the metal wire constituting a wire layer with respect to the axial direction changes in one wire layer.

This filter 10 is used to remove unnecessary substances and the like from various types of fluid such as a liquid and a gas, and used to cool fluids passing through the filter at the same time depending on the purpose of use such as use for an airbag inflator of an automobile. First, this filter is configured to form fluid passages through which a fluid passes in a direction in which wire layers overlap each other, that is, in the radial direction of the filter (a direction in which wire layers overlap). Fluids may be passed through the filter from an inner diameter side to an outer diameter side or from an outer diameter side to an inner diameter side. Here, the radial direction does not necessarily mean a diametrical direction (a radial direction) in a strict sense, but means a substantially radial direction with respect to an axial direction and a circumferential direction.

The size (such as an inner diameter, an outer diameter, and each size in an axial direction) of the filter is appropriately determined according to the configuration and the size of an apparatus having the filter incorporated therein.

As the type of metal used as a material of this filter, iron, steel, soft steel, stainless steel, nickel alloy, copper alloy, titanium alloy, aluminum alloy, and the like can be mentioned. As the type of metal, a metal optimum for the purpose of the filter is selected.

The thickness and the cross-sectional shape of a metal wire (the sectional shape in a direction orthogonal to the longitudinal direction of the metal wire) to be used for the filter are appropriately determined according to the size of the filter, substances removed by the filter, pressure loss, and the like. For example, the section area of a metal wire to be used for a filter for an inflator is approximately 0.007 to 3.2 mm² (when a metal element wire having a true-circular cross section is used as a reference, its wire diameter is approximately 0.1 to 2.0 mm).

A metal wire formed by rolling a metal element wire having a true-circular cross section into a predetermined shape is used for the filter. For example, as the metal wire, a rectangular wire being rolled so as to have a flat rectangular cross section is used. Alternatively, as the metal wire, a deformed wire being rolled so as to have a substantially W-shaped, U-shaped, J-shaped, L-shaped, X-shaped, or other shaped cross section across the entire length in the longitudinal direction is used. Alternatively, as the metal wire, a metal wire having a cross-sectional shape and an external shape that are not constant across the entire length in a longitudinal direction of the metal wire, in other words, a deformed wire being rolled so as to have a cross-sectional shape and an external shape that differ according to a position in the longitudinal direction of the metal wire is used. Such a deformed wire is rolled such that, for example, its cross-sectional shape changes for each length in a longitudinal direction equal to the width of the metal wire.

**In** the filter 10, the metal wire 20 is wound so as not to twist.

The filter 10 has a plurality of contact parts at which metal wire portions are in contact with each other. Heat treatment (for example, heat treatment for sintering) to join all the contact parts (or a plurality of contact parts) at once may be applied to the filter 10. Alternatively, among the contact parts of the filter 10, portions other than an end part at a winding end side may be non-joint parts that are not joined. When heat treatment for sintering the entirety of the filter 10 is not applied, the manufacturing cost of the filter 10 can be reduced and the manufacturing time of the filter 10 can be shortened.

### [State of terminal end part]

The filter 10 according to the present embodiment is characterized by being fusion-cut at a portion where a winding end part (a terminal end part 30) of the metal wire is welded. That is, welding and fusion cutting are concurrently applied to the terminal end part 30 in the filter 10.

In this example, fusion cutting (or thermal cutting) is cutting of a metal wire by using a tension applied to a metal wire by heating the entirety or a portion (an inner diameter side) of the metal wire in a thickness direction to a fusing point or higher. When the entirety of the metal wire in the thickness direction is fused, the fused portion is cut. When a portion of the metal wire in the thickness direction is fused, the fused portion is cut, and a heat affected part (mainly an outer diameter side) adjacent to the fused portion and having its strength decreased due to a texture change caused by heating is cut (torn off). This example is different from a cutting method using a shearing force or metal fatigue in that a force is applied to a metal wire in its longitudinal direction to cut the metal wire.

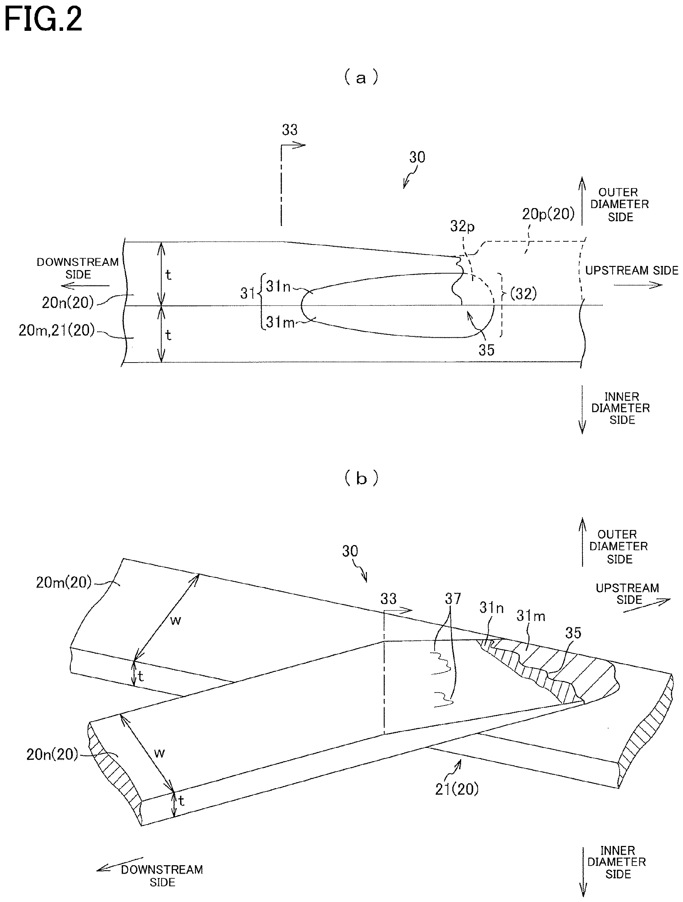

FIGS. 2 are schematic diagrams illustrating a state of the terminal end part of the filter, where FIG. 2(a) is a sectional view of the terminal end part cut along a longitudinal direction of the metal wire and FIG. 2(b) is a perspective view of the filter observed from an outer diameter side.

Hereinafter, a portion of the metal wire portion 20n with which a welding electrode has been brought into contact is referred to as "terminal end part 30". More specifically, the terminal end part 30 is a portion closer to a terminal edge 35 side (a cutting end side) than an indentation 33 made by the welding electrode.

The terminal end part 30 of the metal wire 20 is resistance spot welded to an appropriate portion (a joining target part 21) of another portion (a metal wire portion 20m) of the metal wire 20. In FIGS. 2, only the periphery of the terminal end part 30 of the metal wire portion 20n constituting the wire layer Ln as an outermost layer and a metal wire portion 20m belonging to a wire layer Lm positioned at the inner diameter side of the terminal end part 30 are particularly illustrated (provided that m is a natural number, and m<n). A metal wire portion 20p represented by a dotted line at the right side in FIGS. 2 is a portion separated from the metal wire portion 20n by fusion cutting of the metal wire 20. A fused part 32p represented by a dotted line in FIGS. 2 is a portion of the metal wire portion 20p separated from the metal wire portion 20n after being fused.

Fused solidified parts 31 (31n and 31m) fused at the time of welding and then solidified are formed on the terminal end part 30 as a portion of the metal wire portion 20n and on the metal wire portion 20m where the terminal end part 30 is overlapped. In the fused solidified parts 31, the metal wire portions 20n and 20m are integrated with each other; however, for the sake of convenience, the fused solidified parts 31 positioned at the respective metal wire portion 20n and 20m sides are described separately as fused solidified parts 31n and 31m.

The fused solidified parts 31 and the fused part 32p are a fused part 32 fused right before the metal wire portion 20p is separated.

Hereinafter, a trace left on the winding or the filter due to fusion cutting of the metal wire at a welded portion or at a heat affected part by a method according to the present invention will be described in detail.

### <Fused solidified part of terminal end part>

The fused solidified part 31n is a portion that at least a part thereof in a width direction of the metal wire portion 20n has been solidified after being fused. It is preferable that the fused solidified part 31n is formed only in an area of the metal wire 20 in the width direction. That is, it is preferable that the fused solidified part 31n does not leak to outside of an end edge of the metal wire portion 20n in the width direction (does not leak sideward).

The illustrated terminal end part 30 has the fused solidified part 31n at which the entirety of the metal wire portion 20n in the width direction (the entire width or the entire length in the width direction) has been solidified after being fused. This represents that the entirety of the metal wire 20 in the width direction is covered by the welding electrode at the time of welding, and the entirety of the metal wire 20 in the width direction is fused accordingly. The fused solidified part 31n is formed from the terminal edge 35 across an area of a predetermined length of the metal wire in the longitudinal direction. By fusing the entirety of the metal wire 20 in the width direction, the metal wire 20 can be reliably fusion-cut. Further, since the entirety of the terminal end part 30 in the width direction is fused and joined to the metal wire portion 20m, necessary joint strength can be easily secured.

Since the fused solidified part 31 is fused and then solidified, the fused solidified part is softer than other metal wire portions (except for high-carbon steel). If the metal wire 20 is cut with a nipper, scissors, or the like by using a shearing force, the vicinity of a cut end of the metal wire is work-hardened. However, in the present embodiment, the metal wire is torn off after being fused or softened, so that the terminal end part 30 is not work-hardened. That is, even without applying heat treatment or the like to the winding, the fused solidified part 31 can be prevented from coming into contact with other components and the like and damaging them. Unlike in a case of cutting the metal wire with a nipper, scissors, or the like, the cut end can be prevented as much as possible from rising in a direction intersecting the longitudinal direction of the metal wire.

Since the terminal end part 30 is joined by resistance spot welding, a trace (the indentation 33) of pressurization by an electrode at the time of welding is left on a portion closer to a starting end (closer to a winding start) of the metal wire 20 than the fused solidified part 31. The indentation 33 is formed on the entirety of the metal wire portion 20n in the width direction.

The indentation 33 has a shape corresponding to a contact form of the electrode when pressurizing the metal wire 20. As an example, the indentation 33 has a shape in which a portion not pressurized by the electrode and a portion pressurized by the electrode are continued via a gradual step. As another example, FIG. 2(b) illustrates an example in which no step is formed between the portion not pressurized by the electrode and the portion pressurized by the electrode, and the indentation 33 is recognized as a point of change in a tilt angle (or a thickness) between surfaces on outer diameter sides of these portions.

### <Thinning of terminal end part>

As a whole, the thickness of the terminal end part 30 is less than a thickness t of the other portion of the metal wire 20. This represents that the metal wire has been fusion-cut and the terminal edge 35 has been formed at an appropriate portion of the fused part 32. This characteristic does not appear when the metal wire is cut with a nipper or the like, that is, when the welded portion and the cut end are separated from each other in the longitudinal direction of the metal wire.

The terminal end part 30 has a portion where the thickness of the metal wire 20 is decreased toward the terminal edge 35 of the metal wire 20 (a gradually thinned portion) in a forming area of the fused solidified part 31n. Particularly, a portion of the fused solidified part 31n exposed to outside is gradually thinned toward the terminal edge 35. This represents that the terminal end part 30 has been fused or softened and drawn toward the terminal edge 35 side, and a part of a thick portion positioned at the outer diameter side of the metal wire 20 in the vicinity of the terminal end part 30 has not remained at the winding side but has disappeared by being fusion-cut (the metal wire portion 20p has been separated from the metal wire portion 20n).

Particularly, FIG. 2(b) illustrates an example in which the thickness of the terminal end part 30 is uniformly and gradually decreased toward the terminal edge 35 as a whole.

Here, there is a case where a fused part of the metal wire portion 20n (a portion that becomes the fused solidified part 31n later) aggregates due to the surface tension of a fused metal material, and is deformed into a rounded-off shape such as a spherical shape so as to form a solidified terminal edge 35. For example, the thickness of a downstream side portion of the terminal end part 30 gradually decreases toward the terminal edge; however, there is a case where a portion where the thickness of the vicinity of the terminal edge (an upstream side portion of the terminal end part) locally increases appears. Depending on conditions during fusion cutting, the upstream side portion of the terminal end part 30 may have a portion having a thickness larger than that of the downstream side portion.

### <Drawing trace>

A drawing trace 37 indicating that the softened metal wire portion 20n has been drawn toward the terminal edge 35 of the metal wire 20 is formed on the terminal end part 30. Alternatively, the drawing trace 37 indicates that the softened metal material has been cut as if it has been torn off toward the terminal edge 35. The softened portion is a portion having its strength decreased by heating at the time of welding, and is a heat affected part.

When winding the metal wire 20, a predetermined tension is applied to the metal wire to form the metal wire into a predetermined winding shape. The drawing trace 37 indicates that the metal wire has been fusion-cut by using a tension applied at the time of winding.

That is, the drawing trace 37 is a trace left on the metal wire portion 20n resulting from the metal wire portion 20n being softened along with welding and cut while being drawn toward an upstream side (a side supplying the metal wire) by a tension applied to the metal wire portion 20n. Since the drawing trace 37 is a trace indicating that the metal wire portion has been drawn, the drawing trace is visually distinguishable from a rolling trace left on another portion of the metal wire 20.

### <Exposure of fused solidified part>

At least a portion of the fused solidified part 31n formed at the terminal end part 30 is exposed to outside. In FIG. 2(b), the exposed fused solidified part 31n is shaded. At least a portion close to the terminal edge 35 of the metal wire in the fused solidified part 31n is exposed to outside. The terminal edge 35 is the fused solidified part 31n. In FIG. 2(b), in the metal wire portion 20n, the terminal edge 35 is welded to the metal wire portion 20m and a distance between the portion joined by welding and the terminal edge 35 is zero. The fused solidified part 31n is exposed across a predetermined length of the metal wire in the longitudinal direction from the terminal edge 35. The fused solidified part 31n formed in an area in the width direction of the metal wire portion 20n is exposed to outside. The fused solidified part 31n exposed to outside constitutes a surface on an outer diameter side of the terminal end part 30.

This represents that a part of a thick portion positioned at the outer diameter side of the metal wire portion 20n has disappeared due to drawing and fusion cutting. Particularly, this represents that the metal wire portion 20p has been separated from the metal wire portion 20n along with the fused part 32p that is a portion of the fused part fused at the time of heating. Alternatively, this represents that at least a portion close to the terminal edge 35 of a heat affected part (an unfused part) formed on a surface of the metal wire portion 20n has been torn off.

When the fused solidified part 31 is formed across the entire region of the metal wire portion 20n in the width direction, the terminal end part 30 has a portion where the fused solidified part 31 is exposed across the entire region of the terminal end part 30 in the width direction. In the fused solidified part 31, particularly at a portion close to the terminal edge 35, the fused solidified part 31 is exposed across the entire region in the width direction. This represents that the metal wire portion 20p has been torn off along the longitudinal direction of the metal wire. The fused solidified parts 31n and 31m have a size exerting a joining force that can withstand the tension applied to the metal wire portion 20n.

### <Joining target part>

A part of the metal wire portion 20m to be joined to the terminal end part 30 is referred to as "joining target part 21". The joining target part 21 is described based on a concept that it includes a portion (a joined part) joined to the terminal end part 30 and a portion that might have been joined to the metal wire portion 20n by overlapping the metal wire portion 20n that becomes the terminal end part 30.

The joining target part 21 has the fused solidified part 31m where at least a portion of the metal wire portion 20m in a width direction w has been fused and solidified. In FIG. 2(b), the exposed fused solidified part 31m is shown with a diagonal line.

In this example, at least a portion of the fused solidified part 31m is exposed to outside. That is, at least a portion of the fused solidified part 31n formed at the terminal end part 30 and at least a portion of the fused solidified part 31m formed at the joining target part 21 are both exposed to outside. The fused solidified parts 31n and 31m exposed to outside constitute a surface on the outer diameter side of the winding.

This represents that the fused solidified part 31m has been exposed due to separation of the metal wire portion 20p from the metal wire portion 20n along with a portion (the fused part 32p) of the fused part 32 fused at the time of heating.

### [Real photograph]

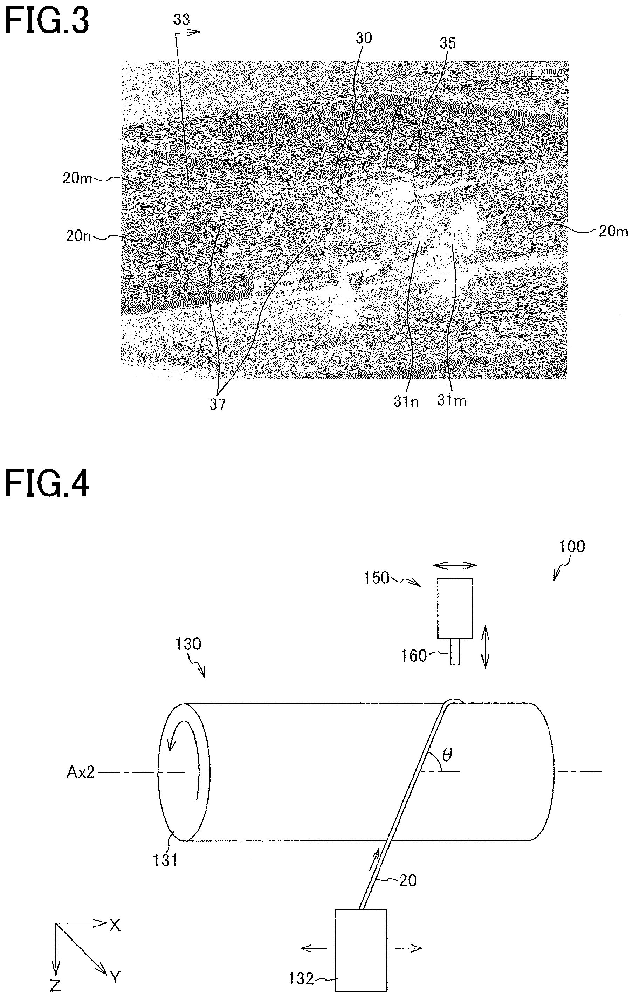

FIG. 3 is a diagram illustrating the vicinity of the terminal end part of the filter in a real photograph. The metal wire 20 used in this drawing has a thickness of 0.2 mm.

The right side with regard to the arrow A in FIG. 3 illustrates a portion where the fused solidified parts 31 are exposed. As illustrated in FIG. 3, it is understood that the features of the filter illustrated in FIG. 2(b) are also shown in a real photograph of the vicinity of the terminal end part 30 of the filter.

### [Manufacturing device of winding]

FIG. 4 is a diagram mainly and schematically illustrating a winding device in a manufacturing device of a winding.

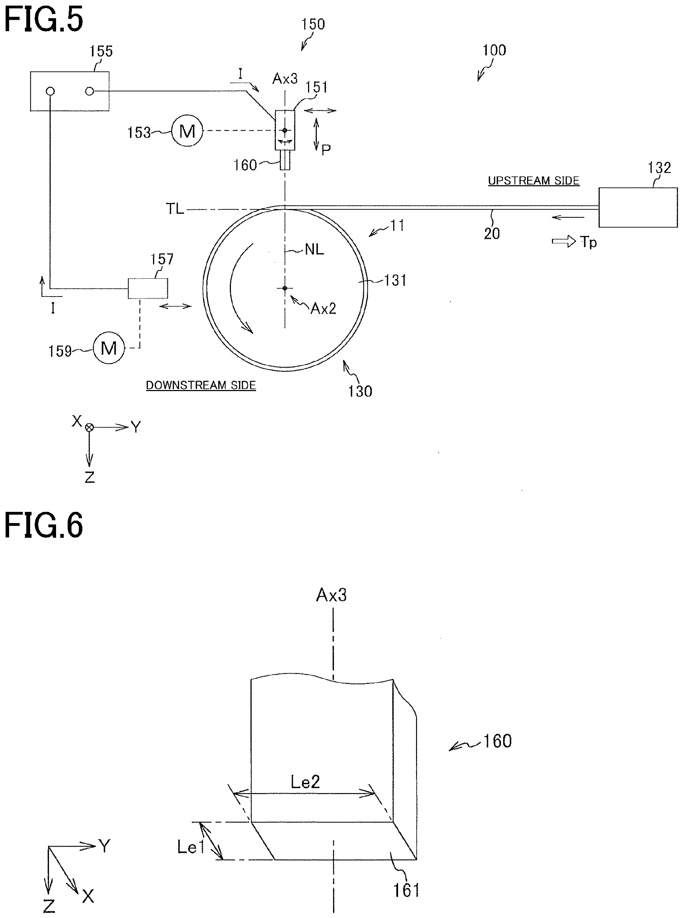

FIG. 5 is a diagram particularly and schematically illustrating a downstream side of a guide member in the manufacturing device of a winding. FIG. 5 corresponds to a diagram of the manufacturing device illustrated in FIG. 4 as viewed from the left side of the drawing.

A manufacturing device 100 for a winding includes at least a winding device 130 and a welding machine 150.

The winding device 130 includes a spindle 131 that rotates in a certain direction at a predetermined speed and a guide member 132 that lets the metal wire 20 out toward the spindle 131 at a predetermined tension and reciprocates along an axis Ax2 of the spindle 131 at a predetermined speed to guide the metal wire 20.

The spindle 131 has a substantially columnar or cylindrical shape and is generally made of metal such as stainless steel, copper alloy, or aluminum alloy.

A tension unit is placed at an upstream side of the winding device 130, and the tension unit applies a predetermined tension to the metal wire 20.

The welding machine 150 joins and fixes an appropriate portion at a winding end side of the metal wire 20 to an appropriate portion of a wound metal wire 20 by resistance spot welding.

The welding machine 150 includes an electrode (a welding electrode) 160 that comes into contact with a to-be-welded object and applies a welding current I to the to-be-welded object while pressuring it, a power source 155 that supplies electric power to the electrode 160, and a contact electrode 157 that is connected to the power source 155 and receives the welding current I. The welding machine 150 includes a welding head 151 that holds the electrode 160, a first drive unit 153 that drives the welding head 151, and a second drive unit 159 that moves the contact electrode 157 closer to or away from the to-be-welded object.

Here, in FIG. 5, a tangent line TL (of the spindle 131) is defined in a direction of the metal wire 20 extending from the guide member 132 toward the spindle 131, and a virtual line passing through the axis Ax2 and orthogonal to both of the tangent line TL and the axis Ax2 is defined as a normal line NL (of the spindle 131). An X axis, a Y axis, and a Z axis are defined in respective directions along the axis Ax2, the tangent line TL, and the normal line NL.

Further, by using a supply direction of the metal wire 20 as a reference, the guide member 132 side is referred to as "upstream side", and the spindle 131 side or the side already wound around the spindle 131 is referred to as "downstream side". The welding machine 150 illustrated in this example pressurizes the electrode 160 in the normal line NL direction of the spindle 131.

The first drive unit 153 reciprocates the welding head 151 holding the electrode 160 along the axis Ax2 direction (the X direction) of the spindle 131, and reciprocates the welding head 151 along the tangent line TL direction (the Y direction) of the spindle 131 so as to move the welding head 151 closer to or away from the spindle 131 in the Z direction in FIG. 5. The first drive unit 153 drives the electrode 160 in the X-Y direction to move the electrode 160 to a portion where the metal wire portion 20n and the metal wire portion 20m overlap each other. The first drive unit 153 is configured to preferably include a servo motor or a stepping motor as means for moving at least the electrode 160 in the X-Y direction. As long as the electrode 160 can be accurately positioned in at least the X-Y direction by a servo motor or a stepping motor, an air cylinder that is not required to have positioning accuracy may be used as means for reciprocating the electrode 160 in the Z direction.

The first drive unit 153 pressurizes a to-be-welded part by the electrode 160 by driving the welding head 151 along the normal line NL direction. While the welding head 151 holds the electrode 160 in a state where a central axis Ax3 of the electrode 160 and a pressurization direction P are caused to coincide with each other, the welding head 151 can hold the electrode 160 in a state where the central axis Ax3 is tilted with respect to the pressurization direction P as necessary.

The power source 155 properly controls the magnitude, current application time, application cycle, waveform, and the like of the welding current I and supplies the welding current I to the electrode 160.

As the contact electrode 157 and the second drive unit 159, well-known appropriate ones are used.

The shape and the like of the electrode 160 will be described later.

### [Method for manufacturing filter]

In order to manufacture the filter 10, first, one end (a starting end or a winding start) of the metal wire 20 is locked on an appropriate portion of the spindle 131 that constitutes the winding device 130. In a state where a tension of 0.01 to 20 [kgf] is applied to the metal wire 20, the spindle 131 is rotated around the axis Ax2 at a predetermined speed in a certain direction, and the guide member 132 that supplies the metal wire 20 is reciprocated along the axis Ax2 of the spindle 131 at a predetermined speed. With this operation, the metal wire 20 is wound around an outer circumference of the spindle 131 in a helical and multilayered manner at a predetermined pitch while tilting at a predetermined angle θ with respect to the axis Ax2. Further, metal wires (portions of the metal wire) constituting wire layers adjacent to each other intersect with each other to form meshes. The meshes overlap each other in a regular arrangement in a radial direction to realize desired set filtering accuracy.

For example, in a first metal wire layer directly wound around the outer circumference of the spindle 131, when each metal wire 20 tilts clockwise at a predetermined angle θ with respect to an axial direction of the spindle 131, a metal wire 20 constituting a second metal wire layer wound around an outer circumference of the first metal wire layer tilts counterclockwise at a predetermined angle θ with respect to the axial direction of the spindle 131. Subsequently, after the metal wire 20 is wound for a predetermined number of times (a predetermined number of layers), the rotation of the spindle 131 is stopped, and the other end part (a terminal end part or a winding end side) of the metal wire 20 is joined and fixed by resistance spot welding to an appropriate portion of the wound metal wire 20.

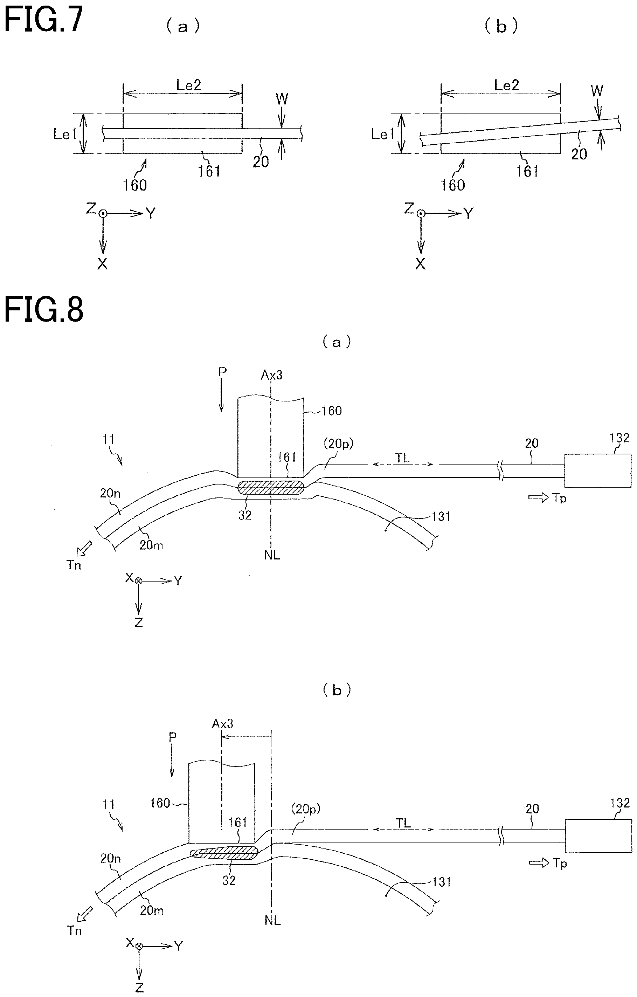

The welding machine 150 brings the electrode 160 and the contact electrode 157 into contact with the winding 11. As illustrated in FIG. 8(a) and other drawings, the power source 155 applies a predetermined welding current I in a state where the electrode 160 presses the metal wire portion 20n against the metal wire portion 20m with a predetermined pressurizing force. The welding current I is set to a current larger than a current sufficient for joining metal wire portions to each other.

The metal wire portion 20n is welded to the metal wire portion 20m in a state where a tension Tp applied during winding is continuously applied. The welding current I is set to a current that causes the metal wire portion 20n to be fused to a degree that the metal wire portion 20n cannot withstand the tension.

A portion of the metal wire positioned right beneath the electrode 160 is cut by the tension being applied to this portion. The metal wire portion 20p positioned at an upstream side of the electrode 160 is separated from the winding 11 in a period of energization of the electrode 160. At this time, the metal wire portion 20p is separated from the winding 11 such that the fused solidified part 31n (see FIG. 2) with a size exerting a joining force that can withstand the tension applied to the metal wire portion 20n remains on the winding 11 side. Since the metal wire is cut by using the tension applied to the metal wire, none of the electrode 160, the spindle 131, and the tension unit are operated at the time of cutting, and the electrode 160 continuously presses and fixes the welded part. Further, since the metal wire is fusion-cut by using the tension applied to the metal wire, welding and cutting can be performed concurrently, and this simplifies manufacturing steps.

After the metal wire is fusion-cut, the power source 155 stops energization. The electrode 160 maintains the pressurization state until the fused parts 32 of the metal wire portions 20n and 20m are cooled and resolidified. After the fused parts 32 are cooled and resolidified, the electrode 160 and the contact electrode 157 are moved away from the winding 11, and the winding 11 is removed from the spindle 131.

For fusion cutting of the metal wire, it is preferable to use a tension being applied to the metal wire continuously from the time of winding. However, when it is possible to fusion-cut the metal wire, since a welded part is fixed by the electrode 160, the tension being applied to the metal wire positioned at an upstream side of the electrode 160 may be controlled to be higher during fusion cutting than during winding. When the tension is changed between during winding and during fusion cutting, the tension of the metal wire is adjusted in a tension unit positioned at the upstream side of the guide member 132.

Although the embodiment described above is an example in which energization is stopped after fusion cutting a metal wire, the metal wire portion 20p may be separated from the winding 11 in a period in which the electrode 160 pressurizes the metal wire after energization of the electrode 160 is stopped.

An angle (a winding angle) of the metal wire 20 with respect to the spindle 131 in the axial direction and a distance (a pitch) between the metal wires 20 adjacent to each other in the axial direction can be changed by appropriately adjusting a ratio between the rotation speed of the spindle 131 and the moving speed of the guide member 132. Pressure loss of fluids that pass through the filter can be controlled to an appropriate value by appropriately changing the thickness, the winding angle, the pitch, and the number of windings of the metal wire.

An inner diameter of the filter 10 is caused to correspond to an outer diameter of the spindle 131, and an outer diameter of the filter 10 is appropriately adjusted according to the thickness and the number of windings of the metal wire 20.

The winding manufactured by the method described above is used as a filter as it is without performing a sintering process on the entire winding.

Alternatively, if necessary, after the winding is removed from the spindle 131, and the adjacent metal wire portions that have come into contact with each other can be metallurgically bonded by performing heat treatment such as sintering on the winding body, and then the winding may be used as a filter.

### [Shape of electrode]

FIG. 6 is a perspective view illustrating an example of an electrode.

FIGS. 7(a) and 7(b) are plan views for explaining a relation between an electrode tip end face and a metal wire that comes into contact with the electrode tip end face.

The electrode 160 has an electrode tip end face 161 that can come into contact with a metal wire at the time of welding.

The electrode tip end face 161 has a shape and a size that can cover the entirety of a metal wire in the width direction across a predetermined length in a longitudinal direction of the metal wire. That is, the electrode tip end face 161 has a first length Le1 that can cover the entirety of the metal wire in the width direction (a length W) at the time of welding and a second length Le2 that covers a predetermined length of the metal wire in the longitudinal direction and is longer than the first length.

However, the length Le1 of the electrode tip end face 161 is set to a length that does not come into contact with other metal wire portions that are objects not to be welded. The "other metal wire portions that are objects not to be welded" mentioned here are metal wire portions extending in the same direction as the metal wire portion 20n (the terminal end part 30) that comes into contact with the electrode tip end face 161, and are portions constituting a surface on an outer diameter side of the winding 11 (exposed to the outer diameter side) and adjacent to the terminal end part 30 in the axial direction of the winding 11, and the expression does not necessarily mean the metal wire portions belonging to the wire layer Ln (see FIG. 1).

The length Le1 of the electrode tip end face 161 is set to a length permitting the entirety of the metal wire 20 in the width direction to be fused so as to enable reliable fusion cutting of the metal wire. Therefore, the length Le1 is set to be longer than the length W of the metal wire 20 in the width direction.

The length Le2 of the electrode tip end face 161 is set to a length that can form a fused part capable of causing fusion cutting the metal wire portion positioned at upstream of the electrode 160, and that can leave the fused part necessary for fixing the terminal end part of the metal wire 20 on the winding side after the metal wire portion at the upstream side is separated. Since the entirety of the metal wire portion 20n in the width direction can be fused and joined to the metal wire portion 20m, necessary joint strength can be secured.

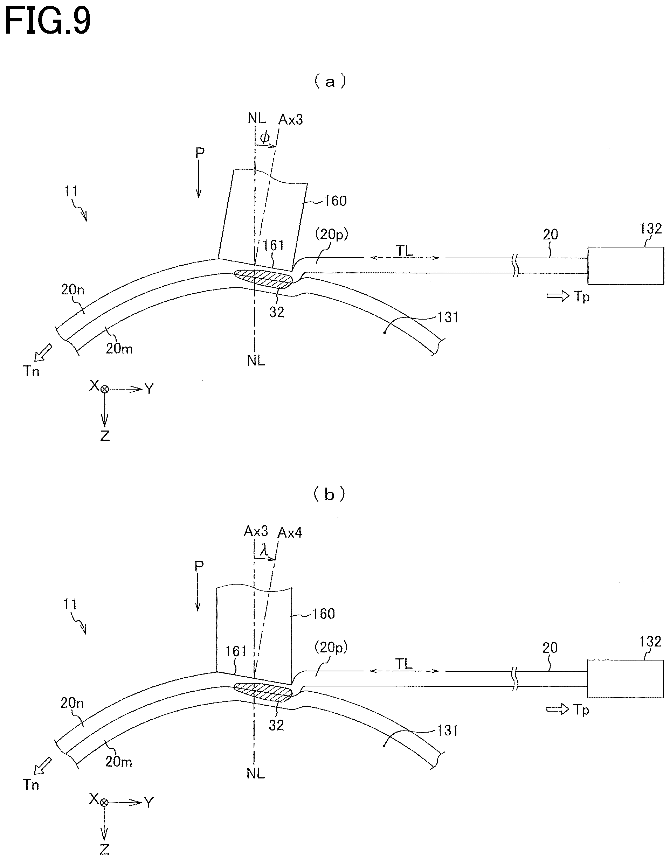

Although the electrode 160 illustrated in the drawings has a rectangular parallelepiped shape having a substantially rectangular electrode tip end face 161, the shape of each part of the electrode 160 is not limited thereto. Further, although an electrode having the electrode tip end face 161 orthogonal to the central axis Ax3 is illustrated in the drawings, the central axis Ax3 and the electrode tip end face 161 may not be orthogonal to each other (example: FIG. 9(b)).

The metal wire 20 may take any posture (angle) in the electrode tip end face 161 as long as the electrode 160 can separate a portion of the metal wire 20 positioned at an upstream side of the electrode 160 and can fix the rest of the metal wire 20 to the winding.

For example, when the electrode tip end face 161 is rectangular, as illustrated in FIG. 7(a), the metal wire 20 may be brought into contact with the electrode tip end face 161 such that the longitudinal direction of the metal wire 20 coincides with the longitudinal direction (the length Le1 direction) of the electrode tip end face 161.

Alternatively, as illustrated in FIG. 7(b), the metal wire 20 may be tilted and brought into contact with the electrode tip end face 161 such that the longitudinal direction of the metal wire 20 does not coincide with the longitudinal direction (the length Le1 direction) of the electrode tip end face 161. The same is true when the electrode tip end face is not rectangular.

As described above, it suffices that the electrode 160 can pressurize the metal wire 20 in a state where the longitudinal direction of the metal wire 20 is substantially along the longitudinal direction of the electrode tip end face 161.

### [Pressurization of metal wire by electrode]

FIGS. 8 to 10 are schematic diagrams illustrating states of a metal wire right before being cut. These drawings respectively illustrate a state where a metal wire as a to-be-welded object is pressurized by an electrode, and a fused part is formed by energizing the electrode.

### <Pressurization 1 of metal wire by electrode>

The electrode 160 illustrated in FIGS. 8(a) and 8(b) is an electrode corresponding to FIG. 6, and is an electrode having the electrode tip end face 161 orthogonal to the central axis Ax3.

FIG. 8(a) illustrates a state of welding both of the metal wire portions 20n and 20m by pressurizing the metal wire portions in the pressurization direction P along the central axis Ax3 by the electrode 160 in a state where positions of the central axis Ax3 of the electrode 160 and the normal line NL are caused to coincide with each other.

The fused part 32 is equally formed at an upstream side (the right side in FIG. 8(a)) and a downstream side (the left side in FIG. 8(a)) of the normal line NL set as a center.

Although the fused part 32 illustrated in FIG. 8(a) does not reach the surface on the outer diameter side of the metal wire portion 20n, depending on welding conditions including the magnitude of the welding current I, the metal wire portion 20n is fused to the surface on the outer diameter side and the fused part 32 comes into contact with the electrode tip end face 161. Similarly, the metal wire portion 20n may also be fused to the surface on the outer diameter side in FIGS. 8(b) to 10.

The metal wire 20 is fusion-cut at an upstream part of the fused part 32 by the tension Tp applied in the longitudinal direction of the metal wire. Subsequently, the metal wire portion 20p positioned at an upstream side of the electrode 160 is separated from the winding 11. Although a tension Tn=Tp is also applied to the metal wire portion 20n positioned at a downstream side of the electrode 160, an unwinding force has a component in the Z direction and pressurization in the Z direction is applied by the electrode 160, so that the metal wire 20 is not fusion-cut at the downstream part of the fused part 32 (the left side of the normal line NL in the drawing), and this portion is finally joined to the winding 11 and becomes the terminal end part 30.

Since spot welding is applied while a tension is applied to the metal wire 20, at the start of pressurization by the electrode 160, the tension Tp=Tn is equally applied to the upstream side and the downstream side of the fused part 32.

Therefore, in this example in which the fused part 32 is equally formed at the upstream side and the downstream side of the normal line NL, there is a possibility that the metal wire 20 is fusion-cut at both of the downstream part and the upstream part of the fused part 32. In order to prevent such a situation, in FIG. 8(a), a tension unit is preferably operated such that a tension Tp>Tn is established after the electrode 160 pressurizes the metal wire portions 20n and 20m. With this operation, the downstream part of the fused part 32 and an unfused part in the metal wire portion 20n can be prevented from being torn off by a tension Tn applied to the metal wire portion 20n, and the metal wire portion 20p can be separated from the winding 11.

FIG. 8(b) illustrates a state of welding both of the metal wire portions 20n and 20m by pressurizing the metal wire portions in the pressurization direction P along the central axis Ax3 by the electrode 160 in a state where the central axis Ax3 of the electrode 160 is placed at the downstream side of the normal line NL. In FIG. 8(b), the normal line NL is positioned outside the electrode tip end face 161, however, the electrode 160 may be placed such that the normal line NL is positioned within the face of the electrode tip end face 161.

Since the central axis Ax3 of the electrode 160 is positioned at the downstream side of the normal line NL, the pressurizing force applied to the metal wire portions 20n and 20m by the electrode 160 becomes comparatively strong at the upstream part of the electrode 160, and becomes comparatively small at the downstream part of the electrode 160. This pressurizing force continuously changes according to the distance from the normal line NL.

At an upstream side portion of the electrode 160, the electric resistance between the metal wire portions 20n and 20m becomes sufficiently small due to a sufficient pressurizing force and the welding current I flows efficiently. At a downstream side portion of the electrode 160, since the pressurizing force is smaller than that at the upstream side portion, the electric resistance increases. Therefore, the welding current I flowing between the metal wire portions 20n and 20m becomes smaller than that at the upstream side portion. The fused part 32 formed between the metal wire portions 20n and 20m is comparatively large at the upstream side and is comparatively small at the downstream side. Therefore, the metal wire portion 20p positioned at the upstream part of the electrode 160 is easily fusion-cut, unnecessary fusion cutting of the metal wire portion 20n positioned at the downstream part of the electrode 160 is prevented, and necessary joint strength between the metal wire portions 20n and 20m can be secured.

Since the metal wire 20 has an oxide coating formed on its surface in most cases, by utilizing the fact that the pressurizing force becomes comparatively strong at the upstream side portion of the electrode 160, it is possible to break the oxide coating of the metal wire at the upstream side portion of the electrode 160 and effectively reduce the electric resistance at this portion.

Depending on the distance between the central axis Ax3 and the normal line NL and the pressurizing force applied to the metal wire 20 by the electrode 160, the welding current I can be prevented from flowing in the downstream side portion of the electrode tip end face 161. In this case, a portion not energized in the electrode tip end face 161 functions as a pressing and cooling unit that cools the metal wire portions 20n and 20m while pressing these metal wire portions. Conversely, a portion energized in the electrode tip end face 161 functions as a pressurizing and energizing unit that energizes the metal wire portions 20n and 20m while pressurizing these metal wire portions. The pressing and cooling unit presses the metal wire portions 20n and 20m and holds them so as to prevent the metal wire portion 20n from being separated from the metal wire portion 20m by the tension Tn applied to the metal wire portion 20n.

### <Pressurization 2 of metal wire by electrode>

FIGS. 9(a) and 9(b) illustrate examples of pressuring the metal wire portions 20n and 20m in a state where the electrode tip end face 161 is tilted with respect to the tangent line TL.

FIG. 9(a) illustrates an example using the electrode 160 having the electrode tip end face 161 orthogonal to the central axis Ax3 as illustrated in FIG. 6.

In this example, the pressurization direction P coincides with the direction of the normal line NL, and an intersection between the electrode tip end face 161 and the central axis Ax3 is on the normal line NL. However, since the central axis Ax3 of the electrode 160 tilts at an angle ϕ toward the upstream side with respect to the normal line NL, the pressurizing force applied to the metal wire portions 20n and 20m by the electrode 160 becomes strong at the upstream part of the electrode 160 and becomes small at the downstream part.

Therefore, for the same reason as in FIG. 8(b), the fused part 32 formed between the metal wire portions 20n and 20m becomes comparatively large at the upstream side and becomes comparatively small at the downstream side. In this example, effects identical to those in FIG. 8(b) are obtained.

The pressurization direction P may be caused to coincide with the direction of the central axis Ax3.

FIG. 9(b) illustrates an example using the electrode 160 having the electrode tip end face 161 not orthogonal to the central axis Ax3. In this electrode 160, an axis Ax4 orthogonal to the electrode tip end face 161 tilts at an angle λ toward the upstream side with respect to the central axis Ax3.

In this example, the pressurization direction P coincides with the direction of the normal line NL, and an intersection between the electrode tip end face 161 and the central axis Ax3 is on the normal line NL. However, since the upstream side portion of the electrode tip end face 161 projects to a tip end direction of the electrode 160, the pressurizing force applied to a metal wire by the electrode 160 becomes strong at the upstream part of the electrode 160 and becomes small at the downstream part.

Therefore, for the same reason as in FIG. 8(b), the fused part 32 formed between the metal wire portions 20n and 20m becomes comparatively large at the upstream side and becomes comparatively small at the downstream side. In this example, effects identical to those in FIG. 8(b) are obtained.

The pressurization direction P may be caused to coincide with the direction of the axis Ax4.

### <Pressurization 3 of metal wire by electrode>

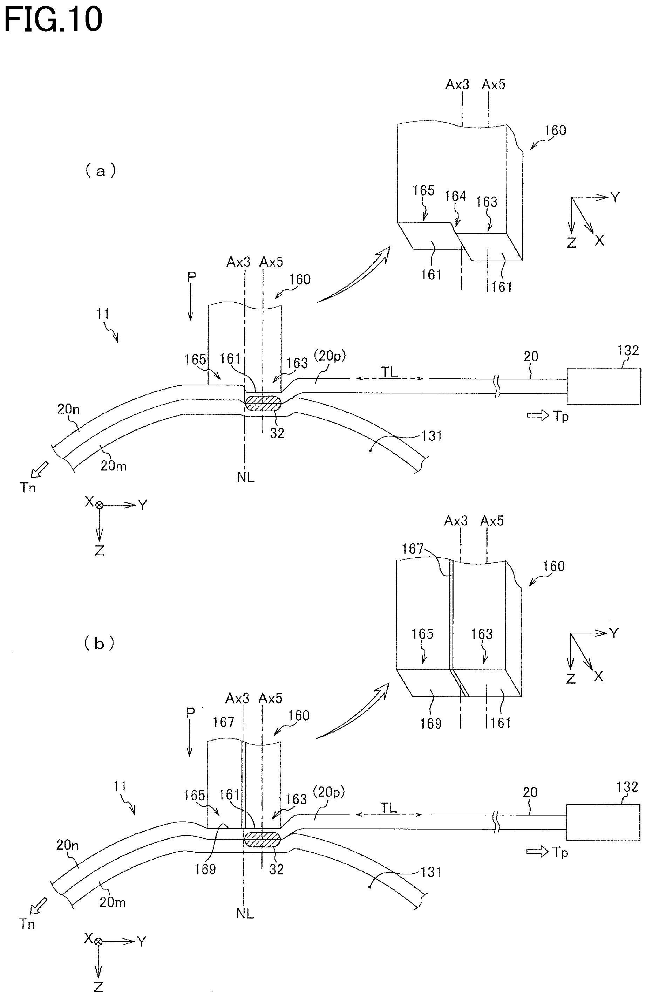

The electrode 160 illustrated in FIGS. 10(a) and 10(b) includes a pressurizing and energizing unit 163 that energizes the metal wire portions 20n and 20m while pressurizing them against an upstream side portion and a pressing and cooling unit 165 that cools the metal wire portions 20n and 20m while pressing them at a downstream side portion.

The electrode 160 in its entirety illustrated in FIG. 10(a) is integrally formed of a conductor. The pressurizing and energizing unit 163 projects more to a tip end direction of the electrode 160 than the pressing and cooling unit 165. Further, a step 164 is formed between the pressurizing and energizing unit 163 and the pressing and cooling unit 165. The electrode tip end face 161 at the pressurizing and energizing unit 163 side and the electrode tip end face 161 at the pressing and cooling unit 165 side are respectively substantially rectangular, and both of them are flat surfaces orthogonal to the central axis Ax3.

FIG. 10(a) illustrates a state of welding both of the metal wire portions 20n and 20m by pressurizing the metal wire portions in the pressurization direction P along the central axis Ax3 by the electrode 160 in a state where the central axis Ax3 and the normal line NL are caused to positionally coincide with each other.

Since the pressurizing and energizing unit 163 projects to the tip end direction of the electrode 160, even when the central axis Ax3 of the electrode 160 and the normal line NL are caused to positionally coincide with each other, a force of the pressurizing and energizing unit 163 to pressurize the metal wire portions can be made stronger than a force of the pressing and cooling unit 165 to press the metal wire portions. Since there is a step between the pressurizing and energizing unit 163 and the pressing and cooling unit 165, the pressurizing force of the pressurizing and energizing unit 163 to pressurize the metal wire and the pressing force of the pressing and cooling unit 165 to press the metal wire portions can be made different in a stepwise manner (non-continuously). A central axis Ax5 of the pressurizing and energizing unit 163 is at an upstream side with respect to the normal line NL.

Therefore, at the pressurizing and energizing unit 163, a sufficient pressurizing force makes an electric resistance between the metal wire portions 20n and 20m sufficiently small and the welding current I flows efficiently. At the pressing and cooling unit 165, the pressing force becomes apparently smaller than that at the pressurizing and energizing unit 163, so that the electric resistance increases and the welding current I can be prevented from flowing.

The electrode 160 forms the fused part 32 only between the metal wire portions 20n and 20m at the pressurizing and energizing unit 163 side. The pressing and cooling unit 165 cools the metal wire portions 20n and 20m while pressing them. The pressing and cooling unit 165 presses the metal wire portions 20n and 20m and holds them to prevent the metal wire portion 20n from being separated from the metal wire portion 20m by the tension Tn applied to the metal wire portion 20n. Therefore, only a portion of the metal wire 20 positioned at an upstream side portion of the electrode 160 can be fusion-cut.

Since the metal wire 20 has an oxide coating formed on its surface in most cases, the oxide coating of the metal wire can be broken at the pressurizing and energizing unit 163 that is a side with a strong pressurizing force and an electric resistance at this portion can be effectively reduced.

The electrode 160 illustrated in FIG. 10(b) includes an insulating member 167 placed between the pressurizing and energizing unit 163 and the pressing and cooling unit 165. A tip end face of the electrode 160 in its entirety is a flat surface orthogonal to the central axis. A tip end face at the pressurizing and energizing unit 163 side is a conductive electrode tip end face 161, and a tip end face at the pressing and cooling unit 165 side is a non-conductive pressing surface 169.

The pressurizing and energizing unit 163 and the pressing and cooling unit 165 can be made of the same material. The pressing and cooling unit 165 is preferably made of a material with high thermal conductivity. By making the pressing and cooling unit 165 itself of an insulator, the insulating member 167 can be omitted.

FIG. 10(b) illustrates a state of welding both of the metal wire portions 20n and 20m by pressurizing the metal wire portions in the pressurization direction P along the central axis Ax3 by the electrode 160 in a state where the central axis Ax3 and the normal line NL are caused to positionally coincide with each other.

The fused part 32 is formed only between the metal wire portions 20n and 20m at the pressurizing and energizing unit 163 side.

Functions of the pressing and cooling unit 165 are identical to those of the electrode illustrated in FIG. 10(a).

In this example, only a portion of the metal wire portion 20n positioned at the upstream side portion of the electrode 160 can be fusion-cut.

Similarly to FIG. 10(a), the pressurizing and energizing unit 163 may be caused to project more to the tip end side than the pressing and cooling unit 165.

### [Effects]

The filter 10 according to the present embodiment is fusion-cut at a portion where the terminal end part 30 has been welded. That is, when manufacturing the filter 10, welding and fusion cutting of the terminal end part 30 are performed concurrently.

Therefore, the present embodiment can provide a winding in which the distance from a welded part to a terminal edge is made as short as possible without increasing the number of manufacturing steps. By making the distance from the welded part to the terminal edge as short as possible, particularly by setting the distance to zero, a winding that does not damage other components and the like by a terminal end part of a metal wire is manufactured, and generating defective windings in which a welded part has been peeled off can be prevented.

### [Summary of actions and effects of aspects of present invention]

### <Winding>

### <<First aspect>>

The present aspect relates to a porous winding (the filter 10) formed by winding at least one continuous metal wire 20 in a helical and multilayered manner. In the winding, the terminal end part 30 (the metal wire portion 20n) of the metal wire is resistance spot welded to another portion (the metal wire portion 20m) of the metal wire and is fusion-cut at this welded portion. Here, the terminal end part is defined as a portion closer to the terminal edge 35 than the indentation 33 made by a welding electrode.

According to the present aspect, a winding in which the distance from a welded part to a terminal edge is made as short as possible without increasing the number of manufacturing steps is provided. It is also possible that the terminal edge is used as the welded part.

Such a winding has external shape characteristics described in third to eleventh aspects as traces related to cutting of a metal wire.

### <<Second aspect>>

The present aspect relates to a porous winding (the filter 10) formed by winding at least one continuous metal wire 20 in a helical and multilayered manner. In the winding, the terminal end part 30 (the metal wire portion 20n) of the metal wire is resistance spot welded to another portion (the metal wire portion 20m) of the metal wire and fusion-cut at this welded portion, and a heat affected part near the welded portion is torn off. Here, the terminal end part is defined as a portion closer to the terminal edge 35 than the indentation 33 made by a welding electrode.

According to the present aspect, a winding in which the distance from a welded part to a terminal edge is made as short as possible without increasing the number of manufacturing steps is provided. It is also possible that the terminal edge is used as the welded part.

Such a winding has external shape characteristics described in the third to eleventh aspects as traces related to cutting of a metal wire.

### <<Third aspect>>

A winding (the filter 10) according to the present aspect is characterized such that the terminal end part 30 (the metal wire portion 20n) has the fused solidified part 31n where the entirety of a metal wire in a width direction has been solidified after being fused.

Specifically, the fused solidified part is formed across a predetermined length in a longitudinal direction from a terminal edge of the metal wire.

According to the present aspect, since the entirety of the metal wire in the width direction is fused, the metal wire can be reliably fusion-cut at this portion. Further, since the entirety of the terminal end part in the width direction is fused and joined to another portion of the metal wire, necessary joint strength can be secured.

### <<Fourth aspect>>

A winding (the filter 10) according to the present aspect is characterized such that at the terminal end part 30 (the metal wire portion 20n), the thickness of the metal wire gradually decreases toward the terminal edge 35 of the metal wire.

The external shape characteristics of the winding according to the present aspect described above represent that a part of a thick portion positioned particularly at an outer diameter side in the metal wire near the terminal end part has not remained at the winding side due to fusion cutting. Further, the external shape characteristics also appear when the terminal end part is drawn toward the direction of the terminal edge due to fusion or softening.

The metal wire cannot be cut at the welded portion with a nipper, scissors, or the like, so that the characteristics according to the present aspect do not appear in a cutting method using a shearing force by a nipper, scissors, or the like. That is, unless the metal wire is cut at a spot-welded portion, the entirety of an indentation is left on the metal wire, so that when the metal wire is cut with a nipper, scissors, or the like, the thickness does not gradually decrease toward the terminal end part.

### <<Fifth aspect>>

A winding (the filter 10) according to the present aspect is characterized such that the drawing trace 37 indicating that a softened metal wire has been drawn toward the terminal edge 35 is formed at the terminal end part 30 (the metal wire portion 20n).

In order to form the metal wire into a predetermined winding shape, a predetermined tension is applied to the metal wire when the metal wire is wound. The drawing trace indicates that the metal wire has been fusion-cut by using the tension applied at the time of winding.

### <<Sixth aspect>>

A winding (the filter 10) according to the present aspect is characterized such that the terminal end part 30 (the metal wire portion 20n) has the fused solidified part 31n where at least a portion of a metal wire in a width direction has been solidified after being fused, and at least a portion of the fused solidified part is exposed to outside.

Normally, a fused solidified part appearing outside in spot welding indicates a welding failure, so that when spot welding is performed, generally a fused solidified part is not exposed to outside. However, in the present aspect, since the metal wire is fusion-cut, at least a portion of the fused solidified part is exposed to outside.

### <<Seventh aspect>>

A winding (the filter 10) according to the present aspect is characterized such that the terminal end part 30 (the metal wire portion 20n) has the fused solidified part 31n where at least a portion of a metal wire in a width direction has been solidified after being fused, the terminal edge 35 of the metal wire is a fused solidified part, and the fused solidified part is exposed to outside across a predetermined length in a longitudinal direction of the metal wire from the terminal edge.

In the present aspect, since the metal wire is fusion-cut, the fused solidified part is exposed to outside. Since a portion of a fused part fused at the time of heating is separated from the winding, the fused solidified part is exposed to outside across a predetermined length in the longitudinal direction from the terminal edge.

### <<Eighth aspect>>

A winding (the filter 10) according to the present aspect is characterized such that the terminal end part 30 (the metal wire portion 20n) has the fused solidified part 31n where at least a portion of a metal wire in a width direction has been solidified after being fused, at least a portion of the fused solidified part is exposed to outside, and a portion exposed to outside in the fused solidified part has a portion with its thickness gradually decreasing toward the terminal edge 35 of the metal wire.

The external shape characteristics of the winding according to the present aspect described above represent that the terminal end part has been drawn toward the direction of the terminal edge, and a part of a thick portion positioned at an outer diameter side in the metal wire near the terminal end part has not remained on the winding side due to fusion cutting.

Such characteristics do not appear when a metal wire is cut with scissors, a nipper, or the like by using a shearing force.

### <<Ninth aspect>>

A winding (the filter 10) according to the present aspect is characterized such that the terminal end part 30 (the metal wire portion 20n) and another portion (the metal wire portion 20m) of the metal wire respectively have fused solidified parts 31 (31n, 31m) having been solidified after being fused, and at least a portion of the fused solidified part 31m formed on the another portion of the metal wire is exposed to outside.

The characteristics described above of the winding according to the present aspect represent that the metal wire portion 20p at an upstream side has been separated from the metal wire portion 20n along with a portion (the fused part 32p) of the fused part fused at the time of heating.

### <<Tenth aspect>>

A winding (the filter 10) according to the present aspect is characterized such that the terminal end part 30 (the metal wire portion 20n) and another portion (the metal wire portion 20m) of the metal wire respectively have fused solidified parts 31 (31n, 31m) having been solidified after being fused, and at least a portion of the fused solidified part 31n formed on the terminal end part and at least a portion of the fused solidified part 31m formed on the another portion of the metal wire are both exposed to outside.

The characteristics described above of the winding according to the present aspect represent that the metal wire portion 20p at an upstream side has been separated from the metal wire portion 20n along with a portion (the fused part 32p) of the fused part fused at the time of heating. In the present aspect, since the metal wire is fusion-cut, the fused solidified part 31n is exposed to outside.

### <<Eleventh aspect>>

A winding (the filter 10) according to the present aspect is characterized such that the terminal end part 30 has the fused solidified part 31n where the metal wire 20 has been solidified after being fused, and the fused solidified part formed within a width of the metal wire portion 20n constituting the terminal end part is exposed to outside.

The fused solidified part exposed to outside constitutes a surface on an outer diameter side of the winding. The external shape characteristics of the winding according to the present aspect represent that a part of a thick portion positioned at the outer diameter side in the metal wire near the terminal end part has not remained on the winding side due to fusion cutting. At least the fused solidified part constituting the surface on the outer diameter side of the winding is not side leakage.

### <Method for manufacturing winding>

### <<Twelfth aspect>>

The present aspect relates to a method for manufacturing a porous winding (the filter 10) formed by winding at least one continuous metal wire 20 in a helical and multilayered manner.

According to the present aspect, the method includes a winding step of winding a metal wire around the spindle 131 in a helical and multilayered manner in a state where a predetermined tension is applied to the metal wire, and a welding step of welding a winding end part (the metal wire portion 20n, the terminal end part 30) of the metal wire to the wound metal wire portion 20m by resistance spot welding.

The welding step is characterized such that a metal wire portion on a supplying side is fusion-cut from the wound metal wire portion by using the tension being continuously applied to the metal wire.

In the present aspect, since the metal wire is fusion-cut by using the tension applied to the metal wire, welding and cutting can be performed concurrently, and manufacturing steps of the winding can be simplified.

The tension to be applied to the metal wire at the time of fusion cutting may be the same as or different from the tension applied to the metal wire in the winding step.

According to the present aspect, it is possible to provide a winding in which the distance from a welded part to a terminal edge is made as short as possible without increasing the number of manufacturing steps.

### <<Thirteenth aspect>>

A manufacturing method according to the present aspect is characterized such that when a side supplying the metal wire 20 to the spindle 131 is set as an upstream side and a side of the metal wire already wound around the spindle is set as a downstream side, in the welding step, the welding electrode 160 is brought into contact with the metal wire portion 20n such that a pressurizing force applied to the metal wire portion 20n at an upstream side of the welding electrode 160 becomes stronger than a pressurizing force applied to a metal wire portion at a downstream side of the welding electrode (FIGS. 8(b) to 10).

According to the present aspect, the fused part is made large at the upstream side portion where the pressurizing force is strong and the fused part is made small at the downstream side portion where the pressurizing force is small. As a result, the metal wire portion at the upstream side portion is easily fusion-cut. Further, unnecessary fusion cutting of the metal wire portion at the downstream side portion can be prevented.

### <<Fourteenth aspect>>

A manufacturing method according to the present aspect is characterized such that when an extending direction of the metal wire 20 to be supplied to the spindle 131 is defined as the tangent line TL direction, and a virtual line passing through an axis Ax2 of the spindle and orthogonal to both of the tangent line and the axis is defined as a normal line NL of the spindle, in the welding step, the welding electrode 160 is placed such that the central axis Ax3 of the welding electrode 160 is at a downstream side with respect to the normal line, and a winding end part of the metal wire is welded to the wound metal wire portion 20m by pressurizing the metal wire (the metal wire portion 20n) in the normal line direction by the welding electrode in a state where directions of the normal line and the central axis are caused to coincide with each other (FIG. 8(b)).

According to the present aspect, since the central axis of the welding electrode is placed at a downstream side with respect to the normal line, a pressurizing force at an upstream side portion of the welding electrode can be made stronger than a pressurizing force at a downstream side portion of the welding electrode. Therefore, the present aspect has effects identical to those of the eleventh aspect.

### <<Fifteenth aspect>>

A manufacturing method according to the present aspect is characterized such that when an extending direction of the metal wire 20 to be supplied to the spindle 131 is defined as the tangent line TL direction, and a virtual line passing through the axis Ax2 of the spindle and orthogonal to both of the tangent line and the axis is defined as the normal line NL of the spindle, in the welding step, in a state where the normal lines (the axis Ax3 and Ax4) of the electrode tip end face 161 of the welding electrode 160 are tilted toward a side supplying the metal wire beyond the normal line NL of the spindle, the metal wire is pressurized by the welding electrode and a winding end part of the metal wire is welded to the wound metal wire portion 20m.

In the present aspect, by tilting the normal line of the electrode tip end face, a pressurizing force at the upstream side portion of the welding electrode is made stronger than a pressurizing force at the downstream side portion of the welding electrode. The present aspect also has effects identical to those of the eleventh aspect.

### <Welding electrode>

### <<Sixteenth aspect>>

The welding electrode 160 according to the present aspect is a welding electrode to be used when manufacturing a porous winding (the filter 10) formed of a metal wire wound in a helical and multilayered manner by winding at least one continuous metal wire 20 around the rotating spindle 131.

The welding electrode 160 is characterized by including the electrode tip end face 161 having a first length Le1 capable of covering the entirety of the metal wire in a width direction at the time of welding (FIGS. 6 to 10).

According to the present aspect, since the entirety of the metal wire in the width direction can be fused, the metal wire can be reliably fusion-cut. The present aspect can provide a winding in which the distance from a welded part to a terminal edge is made as short as possible without increasing the number of manufacturing steps. According to the present aspect, for example, the terminal end part 30 of the metal wire can be joined to another portion (the metal wire portion 20m) of the metal wire by fusing the entirety of the terminal end part in the width direction, so that necessary j oint strength can be secured.

### <<Seventeenth aspect>>

The welding electrode 160 according to the present aspect is characterized such that the electrode tip end face 161 has a second length Le2 capable of covering a predetermined length in a longitudinal direction of the metal wire 20, and the electrode tip end face 161 includes, at one side in a second length direction, the pressurizing and energizing unit 163 that energizes two metal wire portions 20n and 20m as to-be-welded objects overlapping each other while pressurizing the metal wire portions, and includes, at the other side in the second length direction, the pressing and cooling unit 135 that cools one metal wire portion that is in contact with the electrode tip end face while pressing the metal wire portion (FIGS. 10, 9(b)).

According to the present aspect, while the metal wire is fusion-cut at the pressurizing and energizing unit, the metal wire can be prevented from being fusion-cut at the pressing and cooling unit.

### <<Eighteenth aspect>>

The welding electrode 160 according to the present aspect is characterized such that the pressurizing and energizing unit 163 projects more toward a tip end direction of the welding electrode than the pressing and cooling unit 165 (FIGS. 10(a), 9(b)).

According to the present aspect, by projecting the pressurizing and energizing unit more toward a tip end direction of the welding electrode than the pressing and cooling unit, a pressurizing force of the metal wire portion by the pressurizing and energizing unit and a fused part of the metal wire portion can be increased, and a pressurizing force of the metal wire portion by the pressing and cooling unit and a fused part of the metal wire portion can be made small. As a result, the metal wire portion at the pressurizing and energizing unit side is easily fusion-cut. Further, the metal wire portion at the pressing and cooling unit can be prevented from being unnecessarily fusion-cut.

### <<Nineteenth aspect>>

The welding electrode 160 according to the present aspect is characterized such that the pressing and cooling unit 165 is configured not to be energized (FIG. 10(b)).

According to the present aspect, while a metal wire is welded and fusion-cut at the pressurizing and energizing unit, the metal wire can be prevented from being fusion-cut at the pressing and cooling unit.

### <Manufacturing device of winding>

### <<Twentieth aspect>>

The present aspect relates to the manufacturing device 100 that manufactures a porous winding (the filter 10) by winding at least one continuous metal wire 20 in a helical and multilayered manner.

The manufacturing device includes the spindle 131 that rotates at a predetermined speed in a certain direction and around which a metal wire is wound in a helical and multilayered manner, and the welding machine 150 that welds a winding end part (the metal wire portion 20n) of the metal wire to the wound metal wire portion 20m by resistance spot welding.

This welding machine is characterized by including the welding electrode 160 (drawings) according to any of the fourteenth to seventeenth aspects.

The manufacturing device has effects described in the fourteenth to seventeenth aspects.

### Reference Signs List

L... wire layer, w... width of metal wire, t...thickness of metal wire, Le1, Le2..length of electrode tip end face, Tn, Tp...tension, Ax1...central axis of filter, Ax2.. axis of spindle, Ax3...central axis of electrode, Ax4.. axis orthogonal to electrode tip end face, Ax5.. central axis of pressurizing and energizing unit, 10.. filter, 20.. metal wire, 20n, 20m... metal wire portion, 20p...(separated) metal wire portion, 21...joining target part (of metal wire portion 20m), 30...terminal end part, 31, 31n, 31m...fused solidified part, 32...fused part, 32p...(separated) fused part, 33...indentation, 35...terminal edge, 37...drawing trace, 100...manufacturing device, 130... winding device, 131...spindle, 132...guide member, 150...welding machine, 151...welding head, 153...first drive unit, 155...power source, 157... contact electrode, 159... second drive unit, 160...electrode (welding electrode), 161...electrode tip end face, 163...pressurizing and energizing unit, 164... step, 165...pressing and cooling unit, 167... insulating member, 169... pressing surface

## Claims

1. A porous winding formed by winding at least one continuous metal wire in a helical and multilayered manner, wherein
a terminal end part of the metal wire is resistance spot welded to another portion of the metal wire and is fusion-cut at the welded portion.

2. A porous winding formed by winding at least one continuous metal wire in a helical and multilayered manner, wherein
a terminal end part of the metal wire is resistance spot welded to another portion of the metal wire and fusion-cut at the welded portion, and a heat affected part near the welded portion is torn off.

3. A porous winding formed by winding at least one continuous metal wire in a helical and multilayered manner, wherein
a terminal end part of the metal wire is resistance spot welded to another portion of the metal wire and is fusion-cut at the welded portion or at the welded portion and at a heat affected part near the welded portion, and
the terminal end part has a fused solidified part where entirety of the metal wire in a width direction has been solidified after being fused across an area of a predetermined length in a longitudinal direction from a terminal edge of the metal wire.

4. A porous winding formed by winding at least one continuous metal wire in a helical and multilayered manner, wherein
a terminal end part of the metal wire is resistance spot welded to another portion of the metal wire and is fusion-cut at the welded portion or at the welded portion and at a heat affected part near the welded portion, and
at the terminal end part, a thickness of the metal wire gradually decreases toward a terminal edge of the metal wire.

5. A porous winding formed by winding at least one continuous metal wire in a helical and multilayered manner, wherein
a terminal end part of the metal wire is resistance spot welded to another portion of the metal wire and is fusion-cut at the welded portion and at a heat affected part near the welded portion, and
a drawing trace indicating that the metal wire having been softened has been drawn toward the terminal edge is formed at the terminal end part.

6. A porous winding formed by winding at least one continuous metal wire in a helical and multilayered manner, wherein
a terminal end part of the metal wire is resistance spot welded to another portion of the metal wire and is fusion-cut at the welded portion or at the welded portion and at a heat affected part near the welded portion, and
the terminal end part has a fused solidified part where at least a portion of the metal wire in a width direction has been solidified after being fused, and at least a portion of the fused solidified part is exposed to outside.

7. A porous winding formed by winding at least one continuous metal wire in a helical and multilayered manner, wherein
a terminal end part of the metal wire is resistance spot welded to another portion of the metal wire and is fusion-cut at the welded portion or at the welded portion and at a heat affected part near the welded portion, and
the terminal end part has a fused solidified part where at least a portion of the metal wire in a width direction has been solidified after being fused, a terminal edge of the metal wire is the fused solidified part, and the fused solidified part is exposed to outside across a predetermined length in a longitudinal direction of the metal wire from the terminal edge.

8. A porous winding formed by winding at least one continuous metal wire in a helical and multilayered manner, wherein
a terminal end part of the metal wire is resistance spot welded to another portion of the metal wire and is fusion-cut at the welded portion or at the welded portion and at a heat affected part near the welded portion, and
the terminal end part has a fused solidified part where at least a portion of the metal wire in a width direction has been solidified after being fused, at least a portion of the fused solidified part is exposed to outside, and a portion exposed to outside in the fused solidified part has a portion with its thickness gradually decreasing toward a terminal edge of the metal wire.

9. A porous winding formed by winding at least one continuous metal wire in a helical and multilayered manner, wherein
a terminal end part of the metal wire is resistance spot welded to another portion of the metal wire and is fusion-cut at the welded portion or at the welded portion and at a heat affected part near the welded portion, and
the terminal end part and the another portion of the metal wire respectively have fused solidified parts having been solidified after being fused, and at least a portion of the fused solidified part formed on the another portion of the metal wire is exposed to outside.

10. A porous winding formed by winding at least one continuous metal wire in a helical and multilayered manner, wherein
a terminal end part of the metal wire is resistance spot welded to another portion of the metal wire and is fusion-cut at the welded portion or at the welded portion and at a heat affected part near the welded portion, and
the terminal end part and the another portion of the metal wire respectively have fused solidified parts having been solidified after being fused, and at least a portion of the fused solidified part formed on the terminal end part and at least a portion of the fused solidified part formed on the another portion of the metal wire are both exposed to outside.

11. A porous winding formed by winding at least one continuous metal wire in a helical and multilayered manner, wherein
a terminal end part of the metal wire is resistance spot welded to another portion of the metal wire and is fusion-cut at the welded portion or at the welded portion and at a heat affected part near the welded portion,
the terminal end part has a fused solidified part where the metal wire has been solidified after being fused, and
the fused solidified part formed within a width of the metal wire portion constituting the terminal end part is exposed to outside.

12. A method for manufacturing a porous winding formed by winding at least one continuous metal wire in a helical and multilayered manner, the method comprising:
a winding step of winding the metal wire around a spindle in a helical and multilayered manner in a state where a predetermined tension is applied to the metal wire; and
a welding step of welding a winding end part of the metal wire to the wound metal wire portion by resistance spot welding, wherein
in the welding step, the metal wire portion on a supplying side is fusion-cut from the wound metal wire portion by using the tension being continuously applied to the metal wire.

13. The method for manufacturing a winding according to claim 12, wherein
when a side supplying a metal wire to the spindle is set as an upstream side, and a side of the metal wire already wound around the spindle is set as a downstream side,
in the welding step, a welding electrode is brought into contact with the metal wire portion such that a pressurizing force applied to the metal wire portion at an upstream side portion of the welding electrode becomes stronger than a pressurizing force applied to the metal wire portion at a downstream side portion of the welding electrode.

14. The method for manufacturing a winding according to claim 13, wherein
when an extending direction of the metal wire to be supplied to the spindle is defined as a tangent line direction, and a virtual line passing through an axis of the spindle and orthogonal to both of the tangent line and the axis is defined as a normal line of the spindle,
in the welding step, the welding electrode is placed such that a central axis of the welding electrode is at a downstream side with respect to the normal line, and a winding end part of the metal wire is welded to the wound metal wire portion by pressurizing the metal wire in the normal line direction by the welding electrode in a state where directions of the normal line and the central axis are caused to coincide with each other.

15. The method for manufacturing a winding according to claim 13, wherein
when an extending direction of the metal wire to be supplied to the spindle is defined as a tangent line direction, and a virtual line passing through an axis of the spindle and orthogonal to both of the tangent line and the axis is defined as a normal line of the spindle,
in the welding step, in a state where a normal line of an electrode tip end face of the welding electrode is tilted toward a side supplying the metal wire beyond the normal line of the spindle, the metal wire is pressurized by the welding electrode and a winding end part of the metal wire is welded to the wound metal wire portion.

16. A welding electrode to be used when manufacturing a porous winding formed of a metal wire wound in a helical and multilayered manner by winding at least one continuous metal wire around a rotating spindle, the welding electrode comprising:
an electrode tip end face having a first length capable of covering entirety of the metal wire in a width direction at a time of welding.

17. The welding electrode according to claim 16, wherein
the electrode tip end face has a second length capable of covering a predetermined length in a longitudinal direction of the metal wire, and
the electrode tip end face includes, at one side in the second length direction, a pressurizing and energizing unit that energizes two metal wire portions as to-be-welded objects overlapping each other while pressurizing the metal wire portions, and includes, at the other side in the second length direction, a pressing and cooling unit that cools the metal wire portion that is in contact with the electrode tip end face while pressing the metal wire portion.

18. The welding electrode according to claim 17, wherein the pressurizing and energizing unit projects more toward a tip end direction of the welding electrode than the pressing and cooling unit.

19. The welding electrode according to claim 17, wherein the pressing and cooling unit is configured not to be energized.

20. A manufacturing device that manufactures a porous winding by winding at least one continuous metal wire in a helical and multilayered manner, the manufacturing device comprising:
a spindle that rotates at a predetermined speed in a certain direction, and around which the metal wire is wound in a helical and multilayered manner; and
a welding machine that welds a winding end part of the metal wire to a wound metal wire portion by resistance spot welding, wherein
the welding machine includes the welding electrode according to any one of claims 16 to 19.
